# EUROPEAN PATENT APPLICATION

(11) **EP 4 318 035 A1**
(43) Date of publication of application: **07.02.2024**
(21) Application number: 21934803.4
(22) Date of filing: 29.03.2021
(51) Int. Cl.: G01S 7/497, G01S 17/89, G01N 21/3554, G01N 21/49

(54) **MEASURING DEVICE, DETERMINING DEVICE, DETERMINING METHOD, AND PROGRAM**

(71) Applicant: Pioneer Corporation, Tokyo 113-0021 (JP); Pioneer Smart Sensing Innovations Corporation, Tokyo 113-0021 (JP)
(72) Inventor: HOSOI Kenichiro, Kawagoe-shi, Saitama 350-8555 (JP); MIYANABE Shogo, Kawagoe-shi, Saitama 350-8555 (JP); UENO Yumi, Kawagoe-shi, Saitama 350-8555 (JP); SUGIURA Takuma, Kawagoe-shi, Saitama 350-8555 (JP)
(74) Representative: Vossius & Partner Patentanwälte Rechtsanwälte mbB
(86) International application number: PCT/JP2021/013389
(87) International publication number: WO 2022/208630

(57) **Abstract**

A measuring apparatus (10) is an apparatus that emits light through a transmissive member (20) and that detects reflected light from a target. The measuring apparatus (10) includes a light receiving element (18) and an attached-matter determination unit (121). The light receiving element (18) receives reflected light reflected by at least the transmissive member (20). The attached-matter determination unit (121) determines a type of attached matter adhering to the transmissive member (20). The attached-matter determination unit (121) determines whether or not the attached matter is moisture based on, for example, saturation time information indicating a length of time related to saturation of the light receiving element (18).

## Description

### TECHNICAL FIELD

The present invention relates to a measuring apparatus, a determining apparatus, a determining method, and a program.

### BACKGROUND ART

In recent years, development of distance measuring apparatuses that can be used for autonomous driving of an automobile and the like has been performed. An example of the distance measuring apparatus includes a distance measuring apparatus that measures a distance to a surrounding object by measuring the time it takes for emitted light to be reflected by the object and return.

In such a distance measuring apparatus, the presence of attached matter on an emission window, through which light is emitted, affects the distance measurement. Therefore, in a case where there is attached matter, it is necessary to remove the attached matter.

Patent Document 1 describes monitoring a light reception power of light and operating a window cleaning apparatus when it is necessary to remove stains and the like from a window part.

### RELATED DOCUMENT

### PATENT DOCUMENT

Patent Document 1: PCT Japanese Translation Patent Publication No. 2009-503486

### SUMMARY OF THE INVENTION

### TECHNICAL PROBLEM

A unit suitable for removing attached matter varies depending on what the attached matter is. Therefore, it is necessary to correctly discriminate what the attached matter is.

An example of a problem to be solved by the present invention is to accurately discriminate a type of attached matter adhering to an emission window of a measuring apparatus.

### SOLUTION TO PROBLEM

According to the invention described in claim 1,
there is provided a measuring apparatus that emits light through a transmissive member and detects reflected light from a target, the measuring apparatus including:
a light receiving element configured to receive reflected light reflected by at least the transmissive member; and
an attached-matter determination unit configured to determine a type of attached matter adhering to the transmissive member,
in which the attached-matter determination unit is configured to determine whether or not the attached matter is moisture based on saturation time information indicating a length of time related to saturation of the light receiving element.

According to the invention described in claim 13,
there is provided a determining apparatus that determines a type of attached matter adhering to a transmissive member for a measuring apparatus which emits light through the transmissive member and which detects reflected light from a target,
the measuring apparatus including a light receiving element that receives reflected light reflected by at least the transmissive member, the determining apparatus configured to:
   determine whether or not the attached matter is moisture based on saturation time information indicating a length of time related to saturation of the light receiving element.

According to the invention according to claim 14,
there is provided a determining method of determining a type of attached matter adhering to a transmissive member for a measuring apparatus which emits light through the transmissive member and which detects reflected light from a target,
the measuring apparatus including a light receiving element that receives reflected light reflected by at least the transmissive member, the determining method including:
   determining whether or not the attached matter is moisture based on saturation time information indicating a length of time related to saturation of the light receiving element.

According to the invention described in claim 15,
there is provided a program for causing a computer to function as the determining apparatus according to claim 13.

### BRIEF DESCRIPTION OF THE DRAWINGS

Fig. 1 is a diagram illustrating a configuration of a measuring apparatus according to a first embodiment.
Fig. 2 is a diagram illustrating the measuring apparatus according to the first embodiment.
Fig. 3 is a diagram illustrating in detail the configuration of the measuring apparatus according to the first embodiment.
Fig. 4 is a diagram illustrating a hardware configuration of a control unit and an attached-matter determination unit according to the first embodiment.
Fig. 5 is an example of an intensity difference map.
Fig. 6 is a diagram showing an example of a light reception signal waveform of internally reflected light in a case where attached matter is present on a transmissive member.
Fig. 7 is an example of a saturation time map showing a distribution of saturation time for a plurality of emission directions.
Fig. 8 is a diagram illustrating a usage environment of the measuring apparatus according to the first embodiment.
Fig. 9 is a flowchart illustrating a flow in which the attached-matter determination unit determines a type of attached matter.
Fig. 10 is a diagram illustrating a trained model used by an attached-matter determination unit according to a second embodiment.
Fig.11 is a diagram illustrating a configuration of a measuring apparatus according to a third embodiment.
Fig. 12 is a diagram illustrating a configuration of a measuring apparatus according to a fourth embodiment.
Fig. 13 is a block diagram illustrating a configuration of a determining apparatus according to a fifth embodiment.
Fig. 14 is a diagram illustrating a hardware configuration of the determining apparatus according to the fifth embodiment.
Fig. 15 is a flowchart illustrating a flow of a determining method according to the fifth embodiment.
Fig. 16 is a block diagram illustrating a configuration of a control apparatus according to a sixth embodiment.
Fig. 17 is a flowchart illustrating a flow of a control method according to the sixth embodiment.
Fig. 18 is a diagram showing another example of the light reception signal waveform of the internally reflected light in a case where the attached matter is present on the transmissive member.

### DESCRIPTION OF EMBODIMENTS

Hereinafter, embodiments of the present invention will be described with reference to the drawings. In all of the drawings, the same constituent elements are designated by the same reference numerals, and the description thereof will not be repeated as appropriate.

### (First Embodiment)

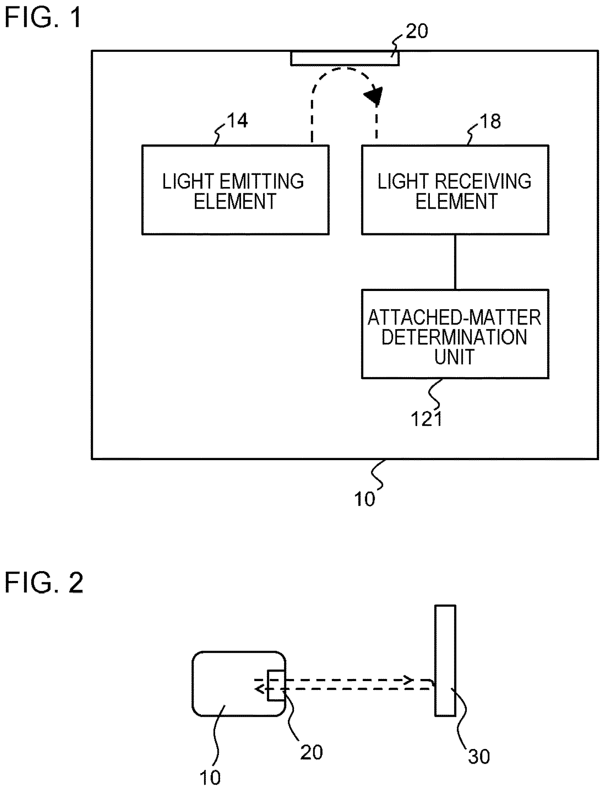

Fig. 1 is a diagram illustrating a configuration of a measuring apparatus 10 according to a first embodiment. Fig. 2 is a diagram illustrating the measuring apparatus 10 according to the present embodiment. In Figs. 1 and 2, dashed arrows schematically indicate paths of light. The measuring apparatus 10 according to the present embodiment is a device that emits light through a transmissive member 20 and that detects reflected light from a target 30. The measuring apparatus 10 includes a light receiving element 18 and an attached-matter determination unit 121. The light receiving element 18 receives reflected light reflected by at least the transmissive member 20. The attached-matter determination unit 121 determines a type of attached matter adhering to the transmissive member 20. The details will be described below.

The measuring apparatus 10 further includes a light emitting element 14 that outputs light. The light output from the light emitting element 14 is emitted to the outside of the measuring apparatus 10 mainly through the transmissive member 20. However, at least a part of the light output from the light emitting element 14 becomes internally reflected light reflected inside the measuring apparatus 10. The internally reflected light is received by the light receiving element 18. This internally reflected light also includes the light reflected by the transmissive member 20. In addition, in a case where attached matter is present on the transmissive member 20, reflected light caused by the attached matter is included in the internally reflected light.

The transmissive member 20 is a light transmissive member that partitions the inside and the outside of the measuring apparatus. The transmissive member 20 is made of, for example, glass or resin. At least one surface of the transmissive member 20 is exposed to an external space of the measuring apparatus 10, and stains, raindrops, and the like may adhere thereto. The reflected light caused by the attached matter includes, for example, light reflected at an interface between the transmissive member 20 and the attached matter, light reflected inside the attached matter, and light reflected at an interface between the attached matter and air. As an example, the attached-matter determination unit 121 can determine the type of attached matter using a light reception result of such reflected light.

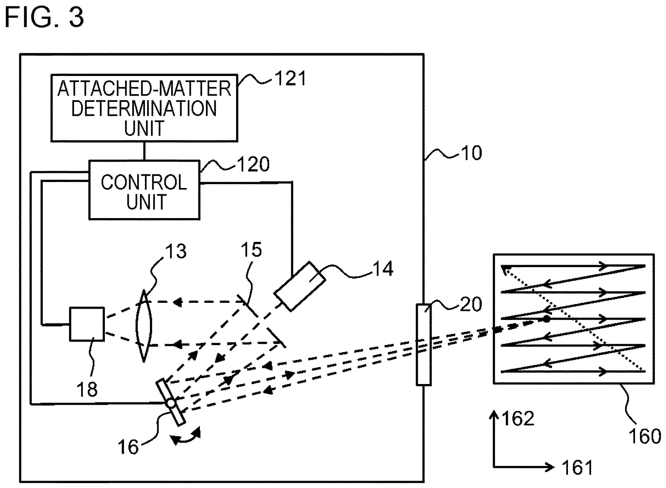

Fig. 3 is a diagram illustrating in detail the configuration of the measuring apparatus 10 according to the present embodiment. In this diagram, dashed arrows schematically indicate paths of light. The configuration of the measuring apparatus 10 will be described in detail with reference to this diagram.

The measuring apparatus 10 is an apparatus that measures a distance from the measuring apparatus 10 to an object (target 30) located within a scanning range 160 based on, for example, a difference between an emission timing of pulsed light and a light reception timing of reflected light (reflected pulsed light). The pulsed light is light such as infrared light, for example. In addition, the pulsed light is, for example, a laser pulse. The pulsed light that is output from the light emitting element 14 provided in the measuring apparatus 10 and that is emitted to the outside of the measuring apparatus 10 through the transmissive member 20 is reflected by the object, and at least a part thereof returns toward the measuring apparatus 10. Then, the reflected light passes through the transmissive member 20 again and is incident on the measuring apparatus 10. The reflected light incident on the measuring apparatus 10 is received by the light receiving element 18 and the intensity thereof is detected. Here, the measuring apparatus 10 measures the time from when the pulsed light is emitted from the light emitting element 14 to when the reflected light is detected by the light receiving element 18. Then, a control unit 120 provided in the measuring apparatus 10 calculates the distance between the measuring apparatus 10 and the object using the measured time and the propagation speed of the pulsed light. The measuring apparatus 10 is, for example, a laser imaging detection and ranging or laser illuminated detection and ranging (LIDAR) device or a light detection and ranging (LiDAR) apparatus.

The light emitting element 14 emits pulsed light. The light emitting element 14 is, for example, a laser diode. The light receiving element 18 receives the pulsed light incident on the measuring apparatus 10 and the internally reflected light described above. The light receiving element 18 is a photodiode such as an avalanche photodiode (APD), for example. In the present embodiment, an example is described in which the light receiving element 18 serves as both a light receiving element for receiving the internally reflected light to determine attached matter and a light receiving element for receiving the reflected light from the target 30 for distance measurement. However, the light receiving element for receiving the internally reflected light to determine attached matter and the light receiving element for receiving the reflected light from the target 30 for distance measurement may be separately provided.

In the example of Fig. 3, the measuring apparatus 10 further includes a movable mirror 16. The movable mirror 16 is, for example, a uniaxially movable or biaxially movable MEMS mirror. By changing a direction of a reflecting surface of the movable mirror 16, the emission direction of the pulsed light emitted from the measuring apparatus 10 can be changed. In a case where the movable mirror 16 is a biaxially movable MEMS mirror, a raster scan can be performed within a predetermined range with pulsed light by biaxially driving the movable mirror 16.

The control unit 120 generates point cloud data including measurement results using a plurality of rays of pulsed light. For example, in a case where a raster scan is performed within the scanning range 160, a linear scan is performed by changing the emission direction of light to a first direction 161. The point cloud data including a plurality of measurement results within the scanning range 160 can be generated by performing a plurality of linear scans while changing the emission direction of light to a second direction 162. In the example of this diagram, the first direction 161 and the second direction 162 are orthogonal to each other.

A unit of the point cloud data generated by one raster scan is called a frame. After the measurement for one frame is completed, the emission direction of light returns to an initial position, and the measurement for the next frame is performed. In this manner, frames are repeatedly generated. In the point cloud data, a distance measured using pulsed light is associated with information indicating the emission direction of the pulsed light. Alternatively, the point cloud data may include three-dimensional coordinates indicating a reflection point of the pulsed light. The control unit 120 generates the point cloud data using the calculated distance and information indicating the angle of the movable mirror 16 when emitting each ray of pulsed light. The generated point cloud data may be output to the outside of the measuring apparatus 10 or may be held in a storage device accessible by the control unit 120.

In the example of this diagram, the measuring apparatus 10 further includes a perforated mirror 15 and a condenser lens 13. The pulsed light output from the light emitting element 14 passes through a hole of the perforated mirror 15, is reflected by the movable mirror 16, and then is emitted from the measuring apparatus 10. In addition, reflected light incident on the measuring apparatus 10 is reflected by the movable mirror 16 and the perforated mirror 15, and then is incident on the light receiving element 18 through the condenser lens 13. The measuring apparatus 10 may further include a collimating lens, a mirror, and the like.

The control unit 120 can control the light emitting element 14, the light receiving element 18, and the movable mirror 16. Further, the control unit 120 receives the light reception signal from the light receiving element 18 and calculates the distance from the measuring apparatus 10 to the object within the scanning range 160 as described above. The attached-matter determination unit 121 can acquire, for example, information necessary for determination through the control unit 120.

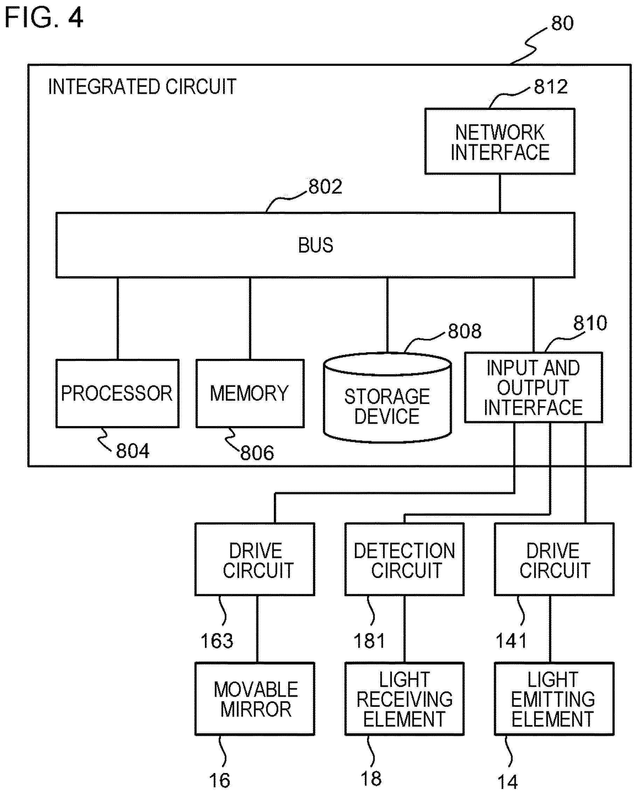

Fig. 4 is a diagram illustrating a hardware configuration of the control unit 120 and the attached-matter determination unit 121 according to the present embodiment. The attached-matter determination unit 121 is implemented using an integrated circuit 80. The control unit 120 is implemented using the integrated circuit 80 and an electronic circuit. The integrated circuit 80 is, for example, a system-on-chip (SoC). The electronic circuit includes, for example, a drive circuit 163 for the movable mirror 16, a detection circuit 181 for the light receiving element 18, and a drive circuit 141 for the light emitting element 14. The drive circuit 141 is a circuit for causing the light emitting element 14 to emit light based on a control signal from the integrated circuit 80 and includes, for example, a switching circuit and a capacitance element. The detection circuit 181 includes an I-V converter and an amplifier and outputs a signal indicating the detected intensity of light by the light receiving element 18.

The integrated circuit 80 includes a bus 802, a processor 804, a memory 806, a storage device 808, an input and output interface 810, and a network interface 812. The bus 802 is a data transmission path for the processor 804, the memory 806, the storage device 808, the input and output interface 810, and the network interface 812 to transmit and receive data to and from each other. However, a method of mutually connecting the processor 804 and the like is not limited to bus connection. The processor 804 is an arithmetic processing device implemented using a microprocessor or the like. The memory 806 is a memory implemented using a random access memory (RAM) or the like. The storage device 808 is a storage device implemented using a read only memory (ROM), a flash memory, or the like.

The input and output interface 810 is an interface for connecting the integrated circuit 80 to peripheral devices. In this diagram, the drive circuit 141 of the light emitting element 14, the detection circuit 181 of the light receiving element 18, and the drive circuit 163 of the movable mirror 16 are connected to the input and output interface 810.

The network interface 812 is an interface for connecting the integrated circuit 80 to a communication network. This communication network is a communication network such as a controller area network (CAN), Ethernet, and low voltage differential signaling (LVDS), for example. A method of connecting the network interface 812 to the communication network may be a wireless connection or a wired connection.

The storage device 808 stores program modules for implementing the functions of the control unit 120 and the attached-matter determination unit 121. The processor 804 reads out and executes the program modules on the memory 806, thereby implementing the functions of the control unit 120 and the attached-matter determination unit 121.

The hardware configuration of the integrated circuit 80 is not limited to the configuration shown in this diagram. For example, the program modules may be stored in the memory 806. In this case, the integrated circuit 80 may not include the storage device 808.

The processing performed by the attached-matter determination unit 121 will be described in detail below. When the operation of the measuring apparatus 10 is started, the attached-matter determination unit 121 determines whether or not there is attached matter on the transmissive member 20 at predetermined time intervals. Alternatively, the attached-matter determination unit 121 determines whether or not there is attached matter on the transmissive member 20 with the reception of a predetermined operation as a trigger. The attached-matter determination unit 121 can determine whether or not there is attached matter based on, for example, the detection result of the light receiving element 18. In a case where it is determined that there is attached matter on the transmissive member 20, the attached-matter determination unit 121 further determines the type of attached matter. A determining method of the presence or absence of attached matter and a determining method of the type of attached matter will be described in detail below.

### <Determination of Presence or Absence of Attached Matter>

The attached-matter determination unit 121 according to the present embodiment can determine the presence or absence of attached matter based on the magnitude of the internally reflected light. The time from when the light is output from the light emitting element 14 to when the internally reflected light is received by the light receiving element 18 is much shorter than the time it takes for the reflected light from the target 30 to be received by the light receiving element 18. The light receiving element 18 receives the internally reflected light of the pulsed light immediately after the pulsed light is emitted from the light emitting element 14. In addition, the timing at which the internally reflected light is received is determined depending on the structure of the measuring apparatus 10. Therefore, it is possible to distinguish the internally reflected light from the reflected light from the target 30 by regarding the light received in a predetermined period from the emission of the pulsed light as the internally reflected light.

In measuring one frame, the measuring apparatus 10 sequentially emits rays of pulsed light in a plurality of directions and measures the intensity of the internally reflected light for each ray of pulsed light. The attached-matter determination unit 121 acquires the received light intensity of the internally reflected light from the light receiving element 18 and generates an intensity map indicating the intensity of the internally reflected light in each emission direction. In addition, a storage unit (for example, the storage device 808) accessible by the attached-matter determination unit 121 holds an initial intensity map that is pre-generated in a similar manner in an initial state. The initial state refers to a clean state in which there is no attached matter on the transmissive member 20. The initial intensity map can be generated, for example, before the measuring apparatus 10 is shipped. The attached-matter determination unit 121 reads out and acquires the initial intensity map from the storage unit, and generates an intensity difference map indicating a difference between the generated intensity map and the initial intensity map.

Next, the attached-matter determination unit 121 determines whether or not the value of each data point included in this intensity difference map is equal to or greater than a predetermined reference value A. Then, the attached-matter determination unit 121 determines whether or not the proportion of a data point having a value equal to or greater than the reference value A is equal to or greater than a predetermined proportion B, for all the data points of the intensity difference map. In a case where the proportion of the data point having a value equal to or greater than the reference value A is equal to or greater than the predetermined proportion B, the attached-matter determination unit 121 determines that there is attached matter on the transmissive member 20. In a case where the proportion of the data point having a value equal to or greater than the reference value A is less than the predetermined proportion B, the attached-matter determination unit 121 determines that there is no attached matter on the transmissive member 20.

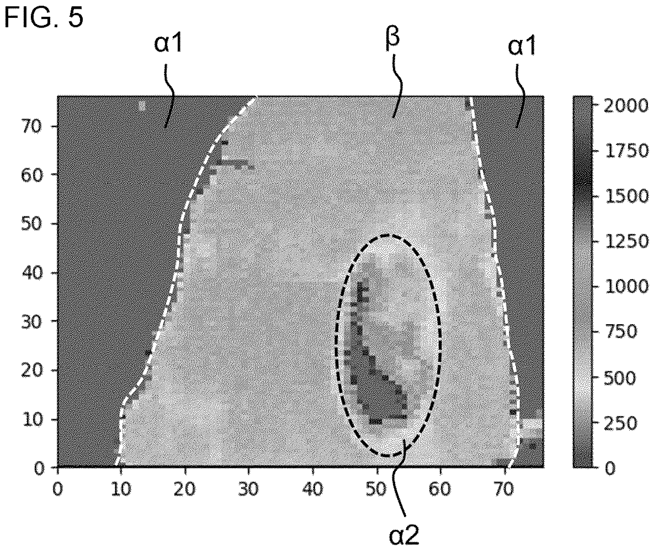

Fig. 5 is an example of the intensity difference map. When this diagram was acquired, a region of the transmissive member 20 corresponding to a region α1 was wet with water, and a region of the transmissive member 20 corresponding to a region α2 was dirty with fingerprints (oil). In addition, there was no attached matter in the region of the transmissive member 20 corresponding to a region β. As can be seen from the example of this diagram, the difference in the intensity of the internally reflected light from the initial state is large in the region where there is attached matter. Therefore, it is possible to determine the presence or absence of attached matter using the intensity difference map.

The detected intensity of the internally reflected light varies depending on the measurement conditions. The measurement conditions include, for example, the light receiving sensitivity, the emission intensity, the temperature near the light receiving element 18, the presence or absence and the type (for example, magnification) of a lens attached to the measuring apparatus 10, and the like. Therefore, the storage unit holds a plurality of the initial intensity maps associated with the measurement conditions in advance, and the attached-matter determination unit 121 may select and acquire, from among them, an initial intensity map corresponding to a measurement condition when the intensity map of the internally reflected light for a frame is acquired.

### <Determination of Type of Attached Matter>

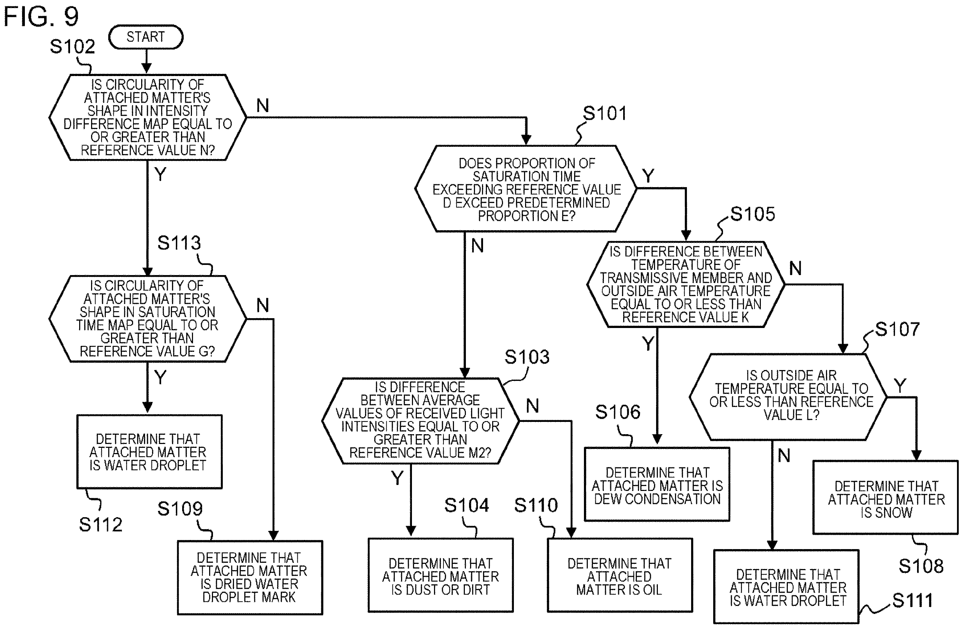

A method for the attached-matter determination unit 121 to determine the type of attached matter (a water droplet, a dried water droplet mark, dust or dirt, oil, dew condensation, snow, and the like) will be described below. The attached-matter determination unit 121 can determine the type of attached matter by combining a plurality of determinations as will be described below. An example of a flowchart in which the plurality of determinations are combined is shown in Fig. 9 and will be described in detail below. Further, the attached-matter determination unit 121 may derive a score representing the level of certainty that the attached matter is a specific type of attached matter through each of the plurality of determinations, as will be described below. In that case, the attached-matter determination unit 121 may calculate an overall score for each type of attached matter by either summing the plurality of derived scores or obtaining a weighted sum of the plurality of scores for each type of attached matter using predetermined weights. The attached-matter determination unit 121 can output the type of attached matter with the highest overall score as the determination result.

### <<Determination Based on Saturation Time Information>>

The attached-matter determination unit 121 can determine whether or not the attached matter is moisture based on saturation time information indicating a length of time related to saturation of the light receiving element 18.

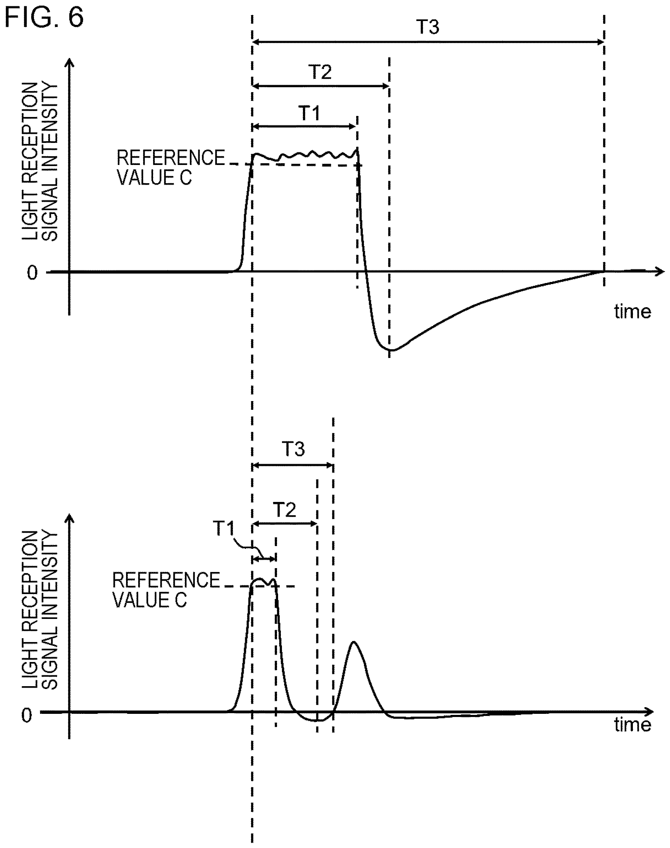

Fig. 6 is a diagram showing an example of a light reception signal waveform of internally reflected light in a case where attached matter is present on the transmissive member 20. This diagram shows the waveform of internally reflected light caused by the attached matter on the transmissive member 20. In this diagram, the waveform shown in the upper part is a waveform in a case where the attached matter is moisture. In this diagram, the waveform shown in the lower part is a waveform in a case where the attached matter is other than moisture, and a first peak is a peak obtained by detecting the internally reflected light. In the waveform of the lower part, the light reception signal of the reflected light reflected by the target 30 is detected as a second peak.

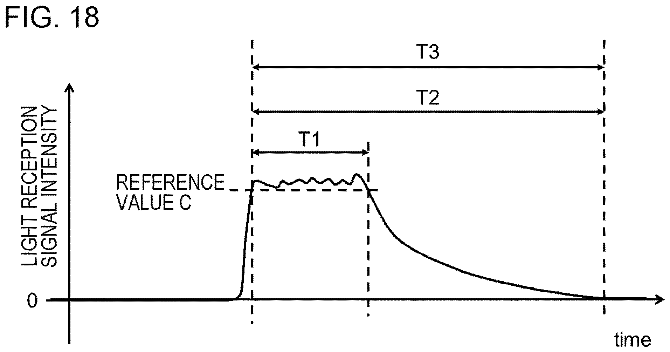

Fig. 18 is a diagram showing another example of the light reception signal waveform of the internally reflected light in a case where the attached matter is present on the transmissive member 20. This diagram shows the waveform of internally reflected light caused by the attached matter on the transmissive member 20. In a case where the attached matter is moisture, the light reception signal waveform of the internally reflected light may be as shown in the example of this diagram.

As shown in this diagram, in a case where the attached matter is moisture, the waveform is affected by saturation over a long period of time. It is considered to be caused by a lens effect resulting from moisture. By using such a length of time during which the effect of saturation occurs, it is possible to determine whether or not the attached matter is moisture.

Examples of the length of time related to saturation, which can be used for the determination, include times T1, T2, and T3 shown in this diagram. Hereinafter, the length of time related to saturation is also simply referred to as "saturation time". The saturation time is at least one of the times T1, T2, and T3. The saturation time information indicates at least one of the times T1, T2, and T3, and the attached-matter determination unit 121 determines whether or not attached matter is moisture based on the saturation time when the reflected light caused by the attached matter is received.

The saturation time is, for example, a length T1 of the time during which the light receiving element 18 is saturated. The attached-matter determination unit 121 measures the time T1 by determining that a state in which the light reception signal output from the light receiving element 18 exceeds a predetermined reference value C is a state in which the light receiving element 18 is saturated. The reference value C is, for example, slightly smaller than the saturation level of the light receiving element. Here, the saturation level means the maximum amount of received light that can be detected by the light receiving element 182 without saturating. The storage unit accessible by the attached-matter determination unit 121 holds in advance a plurality of reference values C associated with the measurement conditions, and the attached-matter determination unit 121 may select and acquire, from among the plurality of reference values C, a reference value C corresponding to a measurement condition when the light reception signal of a determination target is obtained, and use the reference value C for the determination.

The saturation time is, for example, a length T2 of the time in the output waveform of the light receiving element, with a point in time when saturation is started as a starting point and a point in time when a slope initially becomes zero after the saturation as an ending point. The attached-matter determination unit 121 sets a point in time when the light reception signal output by the light receiving element 18 exceeds the reference value C described above after the pulsed light is emitted, as the point in time when saturation is started. Further, the attached-matter determination unit 121 measures the time T2 by calculating a slope at each point of the waveform and detecting the point in time when the calculated slope becomes zero.

The saturation time is, for example, a length T3 of the time in the output waveform of the light receiving element 18, with a point in time when saturation is started as a starting point, and an earlier point in time of a point in time of a second zero-crossing after the saturation and a point in time of a first convergence after the saturation as an ending point. The attached-matter determination unit 121 sets a point in time when the light reception signal output by the light receiving element 18 exceeds the reference value C described above after the pulsed light is emitted, as the point in time when saturation is started. In addition, the attached-matter determination unit 121 detects a point in time of a zero-crossing of the light reception signal and specifies a point in time of a second zero-crossing of the light reception signal after the saturation. Further, the attached-matter determination unit 121 determines that a case where a state in which a signal value is within a predetermined convergence level range continues for a predetermined length is a converged state. In a case where it is determined that the converged state has occurred, a point in time when that state is started, that is, a point in time when the signal value changes from outside the convergence level range to within the convergence level range, is specified as the point in time of the first convergence after the saturation. Note that the convergence level range is a range including zero in between, the upper limit of the convergence level range is slightly greater than zero, and the lower limit of the convergence level range is slightly less than zero. However, the difference between the upper limit of the convergence level range and zero can be made greater than the difference between the lower limit of the convergence level range and zero. This is because, for example, in a case where ambient light is incident on 10, the light reception signal may converge to a level greater than zero by the amount of the ambient light.

The attached-matter determination unit 121 measures the time T3 by selecting the earlier point in time of the point in time of the second zero-crossing after the saturation and the point in time of the first convergence after the saturation. Either the point in time of the second zero-crossing after the saturation or the point in time of the first convergence after the saturation may not be present. In that case, the attached-matter determination unit 121 sets a point in time that can be specified from among the point in time of the second zero-crossing after the saturation and the point in time of the first convergence after the saturation, as the ending point of T3. In the example of Fig. 18, T2 and T3 are the same.

The attached-matter determination unit 121 determines the type of attached matter based on the saturation time information for each of the plurality of emission directions. Specifically, the attached-matter determination unit 121 generates the saturation time information for each of rays of internally reflected light detected in the plurality of emission directions for generating a frame. Then, the attached-matter determination unit 121 determines whether or not the saturation time indicated by the saturation time information for each of the plurality of emission directions exceeds a predetermined reference value D. Further, in a case where the proportion of an emission direction for which the saturation time exceeds the reference value D in the plurality of emission directions exceeds a predetermined proportion E, it is determined that moisture is present as the attached matter. That is, in a case where the proportion of the emission direction for which the saturation time exceeds the reference value D, among all the emission directions in the frame, exceeds the proportion E, it is determined that the moisture is present as the attached matter.

With such a method, it is possible to determine whether the attached matter is moisture such as water droplets (raindrops), dew condensation, and snow, or non-moisture such as oil stains, dust, dirt, and dried raindrop marks.

In addition, it can be said that the higher the proportion of the emission direction for which the saturation time exceeds the reference value D is, the higher the probability that the attached matter is moisture such as water droplets (raindrops), dew condensation, and snow is. Therefore, in a case of calculating the score, for example, the attached-matter determination unit 121 assigns a higher score to moisture (water droplets, dew condensation, and snow) as the proportion of the emission direction for which the saturation time exceeds the reference value D is higher, and assigns a lower score to the types of attached matter other than moisture as the proportion of the emission direction for which the saturation time exceeds the reference value D is higher. Alternatively, in a case where the proportion of the emission direction for which the saturation time exceeds the reference value D exceeds the proportion E, the attached-matter determination unit 121 may assign a score of 1 to moisture (water droplets, dew condensation, and snow) and assign a score of zero to the types of attached matter other than moisture.

The storage unit accessible by the attached-matter determination unit 121 holds in advance a plurality of reference values D associated with the measurement conditions and the types of saturation time (times T1, T2, and T3), and the attached-matter determination unit 121 may select and acquire, from among the plurality of reference values D, a reference value D corresponding to the type of saturation time to be used and a measurement condition when the light reception signal of the determination target is obtained, and use the reference value D for the determination.

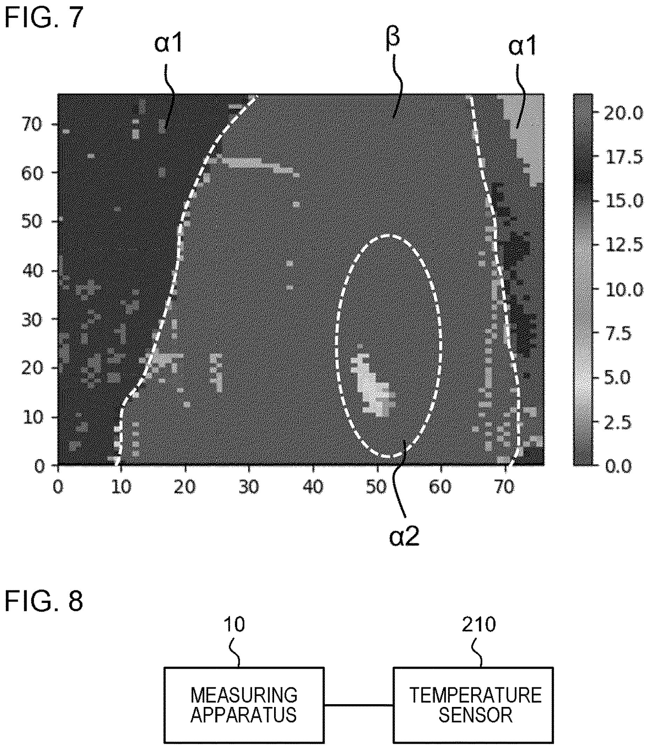

Fig. 7 is an example of the saturation time map showing a distribution of saturation time (time T1) for the plurality of emission directions. A method of generating the saturation time map will be described below. The saturation time map in this diagram and the intensity difference map in Fig. 5 were obtained in the same frame. As shown in Fig. 7, a long saturation time is detected in the region α1 corresponding to the region where water was present, whereas the saturation time remains short in α2 corresponding to the region with oil stains. By using the saturation time in this way, it is possible to accurately detect the presence of moisture as the attached matter.

### <<Determination Based on Shape in Saturation Time Map>>

In a case where it is determined that the attached matter is moisture, the attached-matter determination unit 121 can determine whether or not the attached matter is a water droplet by generating a map indicating the distribution of saturation time and detecting the shape of the attached matter. Specifically, the attached-matter determination unit 121 generates the saturation time map showing the distribution of saturation time indicated by the saturation time information for the plurality of emission directions. That is, the saturation time map shows the saturation time for the plurality of emission directions (data points) within a frame. Then, a region where the time indicated by the saturation time information exceeds a predetermined reference value F is extracted from the saturation time map. Then, it is determined whether or not the attached matter is a water droplet, based on the shape of the extracted region.

For example, the attached-matter determination unit 121 extracts a region consisting of a plurality of data points that are adjacent to each other and each of which has saturation time exceeding the reference value F. Then, the degree of circularity of the extracted region is calculated using an existing method. In addition, it is determined whether or not the calculated degree of circularity exceeds a predetermined reference value G. In a case where a region whose degree of circularity exceeds the reference value G is present, the attached-matter determination unit 121 determines that a water droplet is present as the attached matter.

Furthermore, the attached-matter determination unit 121 may determine whether or not the attached matter is a water droplet, further based on the size of the extracted region. This is because it is considered that a water droplet tends to flow and fall when the water droplet increases to a certain size. For example, the attached-matter determination unit 121 calculates the equivalent circle diameter of the extracted region using an existing method. Then, in a case where a region whose degree of circularity exceeds the reference value G is present, it is determined whether or not the equivalent circle diameter of that region is equal to or less than a predetermined reference value H. Then, in a case where the equivalent circle diameter of the region is equal to or less than the predetermined reference value H, the attached-matter determination unit 121 determines that a water droplet is present as the attached matter.

Further, in a case of calculating the score, for example, the attached-matter determination unit 121 assigns a higher score to the water droplet as the calculated degree of circularity is higher, and assigns a lower score to the types of attached matter other than the water droplet as the calculated degree of circularity is higher. Alternatively, in a case where a region whose degree of circularity exceeds the reference value G is present, the attached-matter determination unit 121 may assign a score of 1 to the water droplet and assign a score of zero to the types of attached matter other than the water droplet.

The storage unit accessible by the attached-matter determination unit 121 holds in advance a plurality of reference values F associated with the measurement conditions, the attached-matter determination unit 121 may select and acquire, from among the plurality of reference values F, a reference value F corresponding to a measurement condition when the light reception signal of a determination target is obtained, and use the reference value F for the determination. In addition, the storage unit accessible by the attached-matter determination unit 121 holds in advance a plurality of reference values H associated with the measurement conditions, and the attached-matter determination unit 121 may select and acquire, from among the plurality of reference values H, a reference value H corresponding to a measurement condition when the light reception signal of a determination target is obtained, and use the reference value H for the determination. For example, the size at which the water droplet is detected depends on the magnification of the lens provided in the measuring apparatus 10. Therefore, the reference value H regarding the equivalent circle diameter can be set according to the magnification of the lens.

The attached-matter determination unit 121 may determine that the attached matter is dew condensation or snow in a case where it is not determined that the water droplet is present as the attached matter.

### <<Determination Based on Shape in Intensity Difference Map>>

The attached-matter determination unit 121 can determine whether or not the attached matter is a water droplet or a dried water droplet mark by detecting the shape of the attached matter using the intensity difference map described above. Specifically, the attached-matter determination unit 121 determines whether or not the value of each data point included in this intensity difference map is equal to or greater than a predetermined reference value J. Then, a region whose value exceeds the reference value J is extracted. Then, it is determined whether or not the attached matter is a water droplet or a dried water droplet mark, based on the shape of the extracted region.

For example, the attached-matter determination unit 121 extracts a region consisting of a plurality of data points that are adjacent to each other and each of which has a value exceeding the reference value J. Then, the degree of circularity of the extracted region is calculated using an existing method. In addition, it is determined whether or not the calculated degree of circularity exceeds a predetermined reference value N. In a case where a region whose degree of circularity exceeds the reference value N is present, the attached-matter determination unit 121 determines that a water droplet or a dried water droplet mark is present as the attached matter. In a case where the attached matter is a dried water droplet mark, the extracted region may be a region indicating an outer edge of a circle.

Furthermore, the attached-matter determination unit 121 may determine whether or not the attached matter is a water droplet or a dried water droplet mark, further based on the size of the extracted region. For example, the attached-matter determination unit 121 calculates the equivalent circle diameter of the extracted region using an existing method. Then, in a case where a region whose degree of circularity exceeds the reference value N is present, it is determined whether or not the equivalent circle diameter of that region is equal to or less than a predetermined reference value P. Then, in a case where the equivalent circle diameter of the region is equal to or less than the predetermined reference value P, the attached-matter determination unit 121 determines that a water droplet or a water droplet is present as the attached matter.

Further, in a case of calculating the score, for example, the attached-matter determination unit 121 assigns a higher score to the water droplet and the dried water droplet mark as the calculated degree of circularity is higher, and assigns a lower score to the types of attached matter that are neither the water droplet nor the dried water droplet mark as the calculated degree of circularity is higher. Alternatively, in a case where a region whose degree of circularity exceeds the reference value N is present, the attached-matter determination unit 121 may assign a score of 1 to the water droplet and the dried water droplet mark and assign a score of zero to the types of attached matter that are neither the water droplet nor the dried water droplet mark.

The storage unit accessible by the attached-matter determination unit 121 holds in advance a plurality of reference values J associated with the measurement conditions, and the attached-matter determination unit 121 may select and acquire, from among the plurality of reference values J, a reference value J corresponding to a measurement condition when the light reception signal of a determination target is obtained, and use the reference value J for the determination.

The shape map methods may be different from each other between the method of determining the shape in the intensity difference map and the method of determining the shape in the saturation time map.

The attached-matter determination unit 121 may determine that the attached matter is dew condensation, snow, dust, dirt, dew condensation, or oil in a case where it is not determined that the dried water droplet mark is present as the attached matter.

### <<Determination Based on Temperature>>

The attached-matter determination unit 121 can determine whether or not the attached matter is a water droplet based on at least one of the temperature of the transmissive member 20 and the outside air temperature.

Fig. 8 is a diagram illustrating a usage environment of the measuring apparatus 10 according to the present embodiment. The measuring apparatus 10 according to the present embodiment can acquire at least one of the temperature of the transmissive member 20 and the outside air temperature of the measuring apparatus 10 from a temperature sensor 210. The temperature sensor 210 may be provided in the measuring apparatus 10. In particular, in a case where the temperature sensor 210 measures the temperature of the transmissive member 20, the temperature sensor 210 is preferably provided in the measuring apparatus 10.

For example, in a case where a value obtained by subtracting the outside air temperature from the temperature of the transmissive member 20 is equal to or less than a predetermined reference value K, the attached-matter determination unit 121 determines that the attached matter is dew condensation. Further, in a case where at least one of the temperature of the transmissive member 20 and the outside air temperature is equal to or less than a predetermined reference value L, the attached-matter determination unit 121 determines that the attached matter is snow.

Further, the attached-matter determination unit 121 can calculate the score as follows. For example, in a case where the value obtained by subtracting the outside air temperature from the temperature of the transmissive member 20 is equal to or less than the predetermined reference value K, the attached-matter determination unit 121 assigns a score of 1 to dew condensation and assigns a score of zero to the types of attached matter other than dew condensation. For example, in a case where at least one of the temperature of the transmissive member 20 and the outside air temperature is equal to or less than the predetermined reference value L, the attached-matter determination unit 121 assigns a score of 1 to snow and assigns a score of zero to the types of attached matter other than snow.

### <<Determination Based on Intensity of Reflected Light From Target>>

The attached-matter determination unit 121 can determine whether or not the attached matter is a water droplet further based on the received light intensity of the reflected light from the target 30. This is because the degree of light obstruction varies depending on the type of attached matter. The control unit 120 generates a received light intensity map showing the received light intensity when the reflected light from the target 30 is received in each emission direction, for each frame.

The attached-matter determination unit 121 specifies an attached-matter region with a high probability that there is attached matter, based on the saturation time map or the intensity difference map described above. The attached-matter region can be specified as a region where the time indicated by the saturation time information exceeds the predetermined reference value F in the saturation time map. Alternatively, the attached-matter region can be specified as a region where the value of the data point exceeds the reference value J in the intensity difference map.

Next, the attached-matter determination unit 121 extracts, from the received light intensity map, the received light intensity of the reflected light from the target 30 in each emission direction within the attached-matter region. Then, the average value of those intensities is calculated. Meanwhile, the storage unit accessible by the attached-matter determination unit 121 holds an initial received light intensity map showing the received light intensity in a state in which no attached matter is present. The attached-matter determination unit 121 extracts the received light intensity corresponding to each emission direction within the attached-matter region, from the initial received light intensity map. Then, the average value of those intensities is calculated. Next, the attached-matter determination unit 121 calculates the difference between the calculated average values (the difference between the average value obtained from the received light intensity map and the average value obtained from the initial received light intensity map), and determines whether or not the calculated difference is equal to or greater than a reference value M1. In a case where the calculated difference is equal to or greater than the reference value M1, the attached-matter determination unit 121 determines that the attached matter is snow. In a case where the calculated difference is less than the reference value M1 and equal to or greater than a reference value M2, the attached-matter determination unit 121 determines that the attached matter is any one of dust, dirt, water droplets, and dew condensation. In a case where the calculated difference is less than the reference value M2, the attached-matter determination unit 121 determines that the attached matter is dried water droplet marks or oil. Note that the reference value M1 is greater than the reference value M2. Further, the attached-matter determination unit 121 may use only one of the reference value M1 and the reference value M2 for the determination, for example, in a case where two types of attached matter need only be distinguished.

Further, the attached-matter determination unit 121 can calculate the score as follows. For example, in a case where the calculated difference is equal to or greater than the reference value M1, the attached-matter determination unit 121 assigns a score of 1 to snow and assigns a score of zero to the types of attached matter other than snow. For example, in a case where the calculated difference is less than the reference value M1 and equal to or greater than the reference value M2, the attached-matter determination unit 121 assigns a score of 1 to dust, dirt, water droplets, and dew condensation, and assigns a score of zero to the types of attached matter that are not dust, dirt, water droplets, or dew condensation. For example, in a case where the calculated difference is less than the reference value M2, the attached-matter determination unit 121 assigns a score of 1 to the dried water droplet mark and the oil and assigns a score of zero to the types of attached matter that are neither the dried water droplet mark nor the oil.

The storage unit holds a plurality of the initial received light intensity maps associated with the measurement conditions in advance, and the attached-matter determination unit 121 may select and acquire, from among them, an initial received light intensity map corresponding to a measurement condition when the received light intensity map is acquired. In addition, the storage unit accessible by the attached-matter determination unit 121 holds in advance a plurality of sets of the reference values M1 and M2 associated with the measurement conditions, and the attached-matter determination unit 121 may select and acquire, from among the plurality of sets, a set corresponding to a measurement condition when the received light intensity map of the determination target is obtained, and use the set for the determination.

### <<Determination Based on Correlation Between Speed of Moving Object and Amount of Attached Matter>>

The attached-matter determination unit 121 can determine the degree of probability that the attached matter is a water droplet based on the strength of the correlation between the speed of a moving object and the amount of attached matter. For example, it is assumed that the measuring apparatus 10 is attached to the moving object such as a vehicle or a two-wheeled vehicle. In a case where raindrops adhere to the transmissive member 20 of the measuring apparatus 10, the amount of raindrops that adhere to the surface facing an advancement direction of the moving object increases as the speed of the moving object increases. Therefore, it can be said that the stronger the correlation between the component of the speed of the moving object in a direction toward the transmissive member 20 and the amount of attached matter is, the higher the probability that the attached matter is a water droplet is.

Specifically, the attached-matter determination unit 121 can perform the following processing. The attached-matter determination unit 121 acquires the speed of the moving object from a sensor provided in the moving object. Further, the storage unit holds in advance information indicating an attachment direction of the measuring apparatus 10 with respect to the moving object, and the attached-matter determination unit 121 acquires the information indicating the attachment direction of the measuring apparatus 10 from the storage unit. Then, the attached-matter determination unit 121 calculates the component of the speed of the moving object in the direction toward the transmissive member 20 (hereinafter, referred to as a "facing component") using the speed of the moving object and the information indicating the attachment direction of the measuring apparatus 10. Further, the attached-matter determination unit 121 determines whether or not the value of each data point included in this intensity difference map described above is equal to or greater than a predetermined reference value J. Then, the number of data points whose values are each equal to or greater than the reference value J is counted. Then, the attached-matter determination unit 121 calculates the degree of correlation between the number of data points whose values are each equal to or greater than the reference value J and the facing component when the intensity difference map is obtained.

Specifically, the attached-matter determination unit 121 generates a plurality of sets in which the number of data points whose values are each equal to or greater than the reference value J in the intensity difference map and the facing component when the intensity difference map is obtained are associated with each other. The plurality of sets are generated for intensity difference maps obtained, for example, at predetermined time intervals. Then, the attached-matter determination unit 121 uses the plurality of sets of pieces of data to calculate a correlation coefficient between the number of data points whose values are each equal to or greater than the reference value J and the facing component. The attached-matter determination unit 121 determines that the larger the obtained correlation coefficient is, the higher the probability that the attached matter is a water droplet is. That is, the attached-matter determination unit 121 assigns a higher score to a water droplet as the obtained correlation coefficient is larger, and assigns a lower score to the types of attached matter other than the water droplet as the obtained correlation coefficient is larger.

The attached-matter determination unit 121 according to the present embodiment determines the type of attached matter on a rule basis using the above-described plurality of determinations. Among them, it is preferable that the attached-matter determination unit 121 determines the type of attached matter on a rule basis using at least the saturation time information.

Fig. 9 is a flowchart illustrating the flow in which the attached-matter determination unit 121 determines the type of attached matter. In the example of this diagram, when the attached-matter determination unit 121 determines the type of attached matter, first in S102, the attached-matter determination unit 121 performs determination based on the shape in the intensity difference map described above. Then, in a case where the degree of circularity of the shape of the attached matter in the intensity difference map is equal to or greater than the reference value N (Y in S102), the attached-matter determination unit 121 performs determination based on the shape in the saturation time map described above, in S113. In a case where the degree of circularity of the shape of the attached matter in the saturation time map is equal to or greater than the reference value G (Y in S113), the attached-matter determination unit 121 determines in S112 that the attached matter is a water droplet (S112). In a case where the degree of circularity of the shape of the attached matter in the saturation time map is not equal to or greater than the reference value G (N in S113), the attached-matter determination unit 121 determines in S109 that the attached matter is a dried water droplet mark (S109).

Meanwhile, in a case where the degree of circularity of the shape of the attached matter in the intensity difference map is not equal to or greater than the reference value N (N in S102), then in S101, the attached-matter determination unit 121 performs determination based on the saturation time information described above. Then, in a case where the proportion of saturation time exceeding the reference value D does not exceed the predetermined proportion E (N in S101), the attached-matter determination unit 121 determines that the attached matter is not moisture, and then performs the processing of S103.

In S103, the attached-matter determination unit 121 performs determination based on the intensity of reflected light from the target described above. In a case where the difference between the average value of the received light intensities is equal to or greater than the reference value M2 (Y in S103), the attached-matter determination unit 121 determines that the attached matter is dust or dirt (S104). On the other hand, in a case where the difference between the average value of the received light intensities is less than the reference value M2 (N in S103), the attached-matter determination unit 121 determines that the attached matter is oil (S110).

Meanwhile, in S101, in a case where the proportion of the saturation time exceeding the reference value D exceeds the predetermined proportion E (Y in S101), the attached-matter determination unit 121 determines that the attached matter is moisture, and then performs the processing of S105. In S105, the attached-matter determination unit 121 performs determination based on the temperature described above. In a case where the value obtained by subtracting the outside air temperature from the temperature of the transmissive member 20 is equal to or less than the reference value K (Y in S105), the attached-matter determination unit 121 determines that the attached matter is dew condensation (S106). In a case where the value obtained by subtracting the outside air temperature from the temperature of the transmissive member 20 exceeds the reference value K (N in S105), the attached-matter determination unit 121 then determines whether or not the outside air temperature is equal to or less than the reference value L (S107). In a case where the outside air temperature is equal to or less than the reference value L (Y in S107), the attached-matter determination unit 121 determines that the attached matter is snow (S108). In a case where the outside air temperature exceeds the reference value L (N in S107), the attached-matter determination unit 121 determines that the attached matter is a water droplet (S111).

Note that the attached-matter determination unit 121 can specify the type of attached matter by combining one or more of the determining methods described above and other determining methods, not limited to the example of Fig. 9.

In addition, the measuring apparatus 10 according to the present embodiment can output information indicating the determined type of attached matter, for example, as display on a display device or audio.

As described above, according to the present embodiment, the attached-matter determination unit 121 can accurately determine the type of attached matter on the transmissive member 20 by using, for example, the saturation time information indicating the length of time related to saturation of the light receiving element 18, and the like.

### (Second Embodiment)

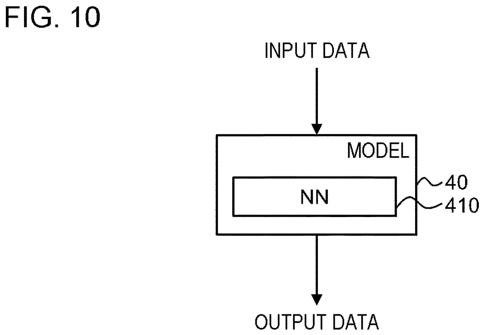

Fig. 10 is a diagram illustrating a trained model 40 used by the attached-matter determination unit 121 according to a second embodiment. The measuring apparatus 10 according to the present embodiment is the same as the measuring apparatus 10 according to the first embodiment except that the attached-matter determination unit 121 performs determination using the trained model 40 trained through machine learning. The details will be described below.

The attached-matter determination unit 121 according to the present embodiment reads out and acquires the trained model 40 from the storage unit accessible by the attached-matter determination unit 121. The attached-matter determination unit 121 inputs input data to the model 40 and obtains output data of the model 40. The input data for the model 40 includes, for example, the saturation time information. In addition, the input data for the model 40 includes, for example, one or more maps showing the distribution of detection results in a plurality of measurement directions. Examples of the maps include the intensity map, the intensity difference map, the saturation time map (saturation time is T1), the saturation time map (saturation time is T2), the saturation time map (saturation time is T3), and the received light intensity map, which are described above. In addition, the input data for the model 40 may further include information indicating the measurement conditions when each map is obtained. The output data of the model 40 is information indicating the certainty factor of each of a plurality of types of attached matter. This certainty factor indicates, for example, the level of certainty that that type of attached matter adheres to the transmissive member 20.

The trained model 40 includes a neural network 410. The trained model 40 is a model that has been trained through machine learning in advance using a plurality of pieces of training data. The training data is data in which one or more maps are associated with information indicating one or more types of attached matter that have actually adhered when that maps are obtained.

The attached-matter determination unit 121 generates one or more maps based on the detection result of the light receiving element 18 in order to determine the type of attached matter. Then, the attached-matter determination unit 121 inputs one or more generated maps to the model 40 as the input data to obtain the output data of the model 40. The attached-matter determination unit 121 outputs, for example, the type of attached matter with the highest certainty factor in the obtained output data, as the determination result. Alternatively, the attached-matter determination unit 121 may output one or more types of attached matter for which the certainty factor indicated in the obtained output data is higher than a predetermined value, as the determination result.

The attached-matter determination unit 121 can accurately determine the type of attached matter by using such a model 40. The attached-matter determination unit 121 may determine the type of attached matter by combining the rule-based determination as described in the first embodiment and the determination using the model 40.

According to the present embodiment, the same operations and effects as in the first embodiment can be obtained.

### (Third Embodiment)

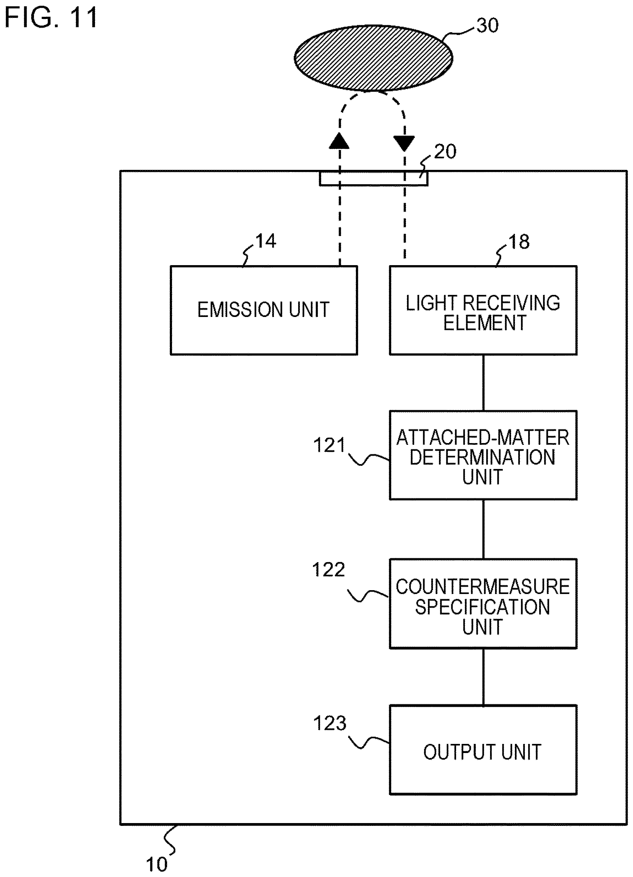

Fig.11 is a diagram illustrating a configuration of a measuring apparatus 10 according to a third embodiment. In this diagram, dashed arrows schematically indicate a path of light. The measuring apparatus 10 according to the present embodiment is the same as the measuring apparatus 10 according to the first or second embodiment except for the points to be described below.

The measuring apparatus 10 according to the present embodiment is an apparatus that emits light through the transmissive member 20 and that detects reflected light from the target 30. The measuring apparatus 10 includes the attached-matter determination unit 121, a countermeasure specification unit 122, and an output unit 123. The attached-matter determination unit 121 determines the type of attached matter on the transmissive member 20. The countermeasure specification unit 122 specifies one or more countermeasures based on the type of attached matter. Then, the output unit 123 outputs information indicating the specified countermeasure. The details will be described below.

The attached-matter determination unit 121 according to the present embodiment is the same as the attached-matter determination unit 121 described in the first or second embodiment. The countermeasure specification unit 122 acquires information indicating the determination result from the attached-matter determination unit 121. The storage unit accessible by the countermeasure specification unit 122 holds in advance countermeasure information in which the type of attached matter is associated with the countermeasure. The countermeasure information is, for example, a table showing the correspondence between the type of attached matter and the countermeasure. The countermeasure specification unit 122 reads out the countermeasure information from the storage unit and extracts the countermeasure corresponding to the determination result of the attached-matter determination unit 121. The attached-matter determination unit 121 may specify a plurality of countermeasures for one type of attached matter. That is, in the countermeasure information, a plurality of countermeasures may be associated with one type of attached matter.

Next, the output unit 123 according to the present embodiment outputs, as the information indicating the countermeasure, information for issuing a notification of urging implementation of the specified countermeasure. For example, the output unit 123 outputs information for causing the display device connected to the measuring apparatus 10 to display "please wipe the emission window with a cloth" and the like. Alternatively, the output unit 123 outputs information for causing a speaker connected to the measuring apparatus 10 to output audio such as "please wipe the emission window with a cloth".

The relationship between the type of attached matter and the countermeasure will be described below. For example, in a case where the attached-matter determination unit 121 determines that the attached matter is at least one of water droplets, dew condensation, and snow, the countermeasure specification unit 122 specifies at least heating using a heater as the countermeasure. However, in a case where the attached-matter determination unit 121 determines that the attached matter is moisture, the countermeasure specification unit 122 may specify at least heating using the heater as the countermeasure.

The heater is provided to heat the transmissive member 20 and can evaporate the moisture adhering to the transmissive member 20 through heating. In order to remove water droplets and the like with the heater, it is important to start heating at a stage where the amount of moisture is small, such as at the start of rainfall. This is because, in a case where the amount of moisture is large, it may not be possible to efficiently remove the moisture through heating. Therefore, it is important for the measuring apparatus 10 to quickly discriminate the type of attached matter on the transmissive member 20 through the attached-matter determination unit 121 and take appropriate measures.

In a case where the attached-matter determination unit 121 determines that the attached matter is water droplets, the countermeasure specification unit 122 may specify at least one of a heater, air-based removal, a wiper, and a water shower as the countermeasure. Further, in a case where the attached-matter determination unit 121 determines that the attached matter is snow, the countermeasure specification unit 122 may specify at least one of a heater and a dissolution solution shower as the countermeasure.

For example, in a case where the attached-matter determination unit 121 determines that the attached matter is at least one of dirt and dust, the countermeasure specification unit 122 specifies air-based removal as the countermeasure. In a case where dust or dirt adheres to the transmissive member 20, there is a risk of damaging the transmissive member 20 when wiping with a wiper or a cloth is performed. Therefore, it is preferable to perform air-based removal using a compressor or a blower.

In a case where the attached-matter determination unit 121 determines that the attached matter is at least one of dirt and dust, the countermeasure specification unit 122 may specify at least one of air-based removal and an ionizer as the countermeasure.

In addition, the countermeasure specification unit 122 may further specify a countermeasure that should not be performed for the type of attached matter. In that case, in the countermeasure information, the countermeasure that should not be performed is further associated with the type of attached matter. The countermeasure specification unit 122 reads out countermeasure information and extracts the countermeasure that should not be performed, which corresponds to the determination result of the attached-matter determination unit 121. For example, in a case where the attached-matter determination unit 121 determines that the attached matter is at least one of dirt and dust, the countermeasure specification unit 122 specifies wiping as the countermeasure that should not be performed. The output unit 123 can further output information for causing the display device or the speaker connected to the measuring apparatus 10 to issue a notification of the countermeasure that should not be performed.

For example, in a case where the attached-matter determination unit 121 determines that the attached matter is stains other than moisture, the countermeasure specification unit 122 specifies cleaning through at least one of wiping and a liquid agent as the countermeasure. The stains other than moisture are, for example, oil or dried water droplet marks.

In a case where the attached-matter determination unit 121 determines that the attached matter is dried water droplet marks, the countermeasure specification unit 122 may specify at least one of a water shower, cleaning with a liquid agent, and wiping with a damp cloth as the countermeasure. In a case where the attached-matter determination unit 121 determines that the attached matter is oil, the countermeasure specification unit 122 may specify at least one of the wiping methods as the countermeasure.

The countermeasure specification unit 122 and the output unit 123 according to the present embodiment are implemented using the integrated circuit 80 as shown in Fig. 4. The storage device 808 further stores program modules for implementing each function of the countermeasure specification unit 122 and the output unit 123. The processor 804 reads out and executes each of the program modules on the memory 806, thereby implementing the functions of the countermeasure specification unit 122 and the output unit 123.

According to the present embodiment, the same operations and effects as in the first embodiment can be obtained. In addition, the countermeasure specification unit 122 specifies one or more countermeasures based on the type of attached matter. Therefore, the user can easily grasp an appropriate countermeasure.

### (Fourth Embodiment)

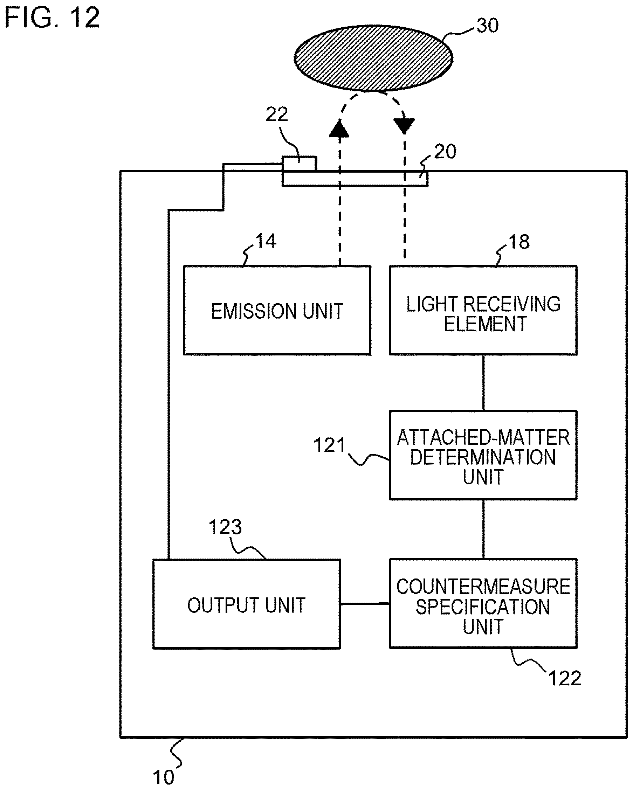

Fig. 12 is a diagram illustrating a configuration of a measuring apparatus 10 according to a fourth embodiment. In this diagram, dashed arrows schematically indicate a path of light. The measuring apparatus 10 according to the present embodiment is the same as the measuring apparatus 10 according to the third embodiment except for the points to be described below.

The measuring apparatus 10 according to the present embodiment further includes one or more removal units 22. The output unit 123 according to the present embodiment outputs a control signal for controlling the one or more removal units 22 based on the specified countermeasure. That is, the output unit 123 outputs the control signal for controlling the removal unit 22 corresponding to the countermeasure as the information indicating the countermeasure. The details will be described below.

Examples of the removal unit 22 include a heater, a dryer, a compressor, a blower, a water shower, a dissolution solution shower, a liquid agent ejector, a wiper, and an ionizer. The removal unit 22 is provided to remove the attached matter on the transmissive member 20.

For example, in a case where the countermeasure specified by the countermeasure specification unit 122 is the heating using the heater, the output unit 123 outputs a control signal for driving at least one of the heater and the dryer. In a case where the countermeasure specified by the countermeasure specification unit 122 is the air-based removal, the output unit 123 outputs a control signal for driving at least one of the compressor and the blower. In a case where the countermeasure specified by the countermeasure specification unit 122 is the dissolution solution shower, the output unit 123 outputs a control signal for driving the dissolution solution shower. In a case where the countermeasure specified by the countermeasure specification unit 122 is the water shower, the output unit 123 outputs a control signal for driving the water shower. In a case where the countermeasure specified by the countermeasure specification unit 122 is the ionizer, the output unit 123 outputs a control signal for driving the ionizer. In a case where the countermeasure specified by the countermeasure specification unit 122 is the wiping, the output unit 123 outputs a control signal for driving the wiper. In a case where the countermeasure specified by the countermeasure specification unit 122 is the cleaning with a liquid agent, the output unit 123 outputs a control signal for driving the liquid agent ejector.

The removal unit 22 is driven by the control signal output from the output unit 123 to remove the attached matter from the transmissive member 20.

In a case where the removal unit 22 corresponding to the countermeasure specified by the countermeasure specification unit 122 is not present as a control target (for example, wiping with a cloth), the output unit 123 may output the information for issuing a notification of performing the countermeasure to the display device or the speaker, as described in the third embodiment.

In addition, in a case where the countermeasure specification unit 122 further specifies the countermeasure that should not be performed, the output unit 123 does not drive the removal unit 22 corresponding to the countermeasure. For example, in a case where the attached-matter determination unit 121 specifies water droplets and dust as the attached matter, the output unit 123 removes the water droplets by prioritizing other countermeasures without driving the wiper.

According to the present embodiment, the same operations and effects as in the first embodiment can be obtained. In addition, the output unit 123 according to the present embodiment outputs a control signal for controlling the one or more removal units 22 based on the specified countermeasure. Therefore, attached matter can be removed appropriately.

### (Fifth Embodiment)

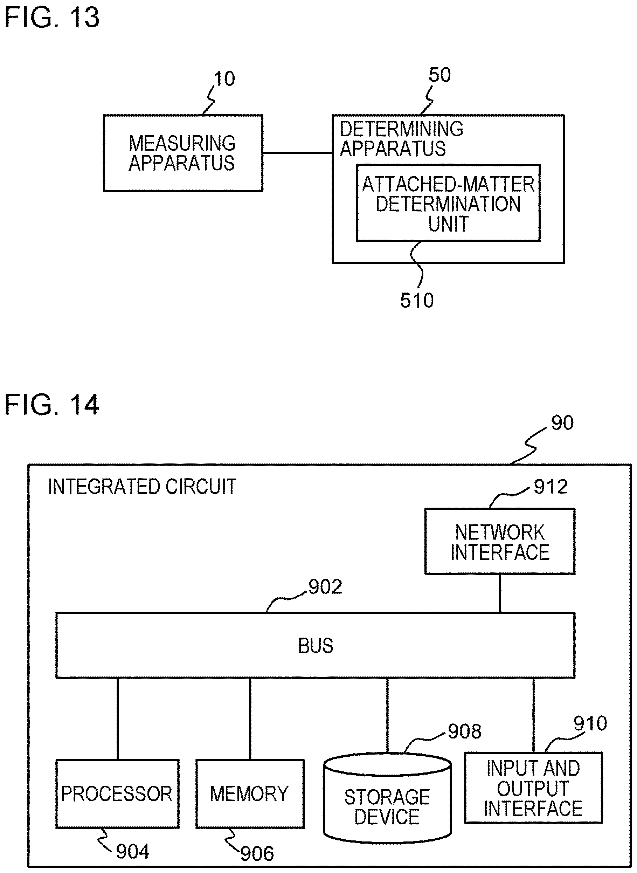

Fig. 13 is a block diagram illustrating a configuration of a determining apparatus 50 according to a fifth embodiment. The determining apparatus 50 according to the present embodiment is an apparatus that determines the type of attached matter adhering to the transmissive member 20 for the measuring apparatus 10 which emits light through the transmissive member 20 and which detects the reflected light from the target 30. The measuring apparatus 10 includes the light receiving element 18 that receives the reflected light reflected by at least the transmissive member 20. The details will be described below.

The measuring apparatus 10 according to the present embodiment is the same as the measuring apparatus 10 according to the first embodiment except that the attached-matter determination unit 121 is not provided. The determining apparatus 50 according to the present embodiment acquires information necessary for determination from the measuring apparatus 10 and performs determination. The determining apparatus 50 includes an attached-matter determination unit 510. The attached-matter determination unit 510 performs the same processing as the attached-matter determination unit 121 according to the first or second embodiment.

For example, the determining apparatus 50 acquires information indicating, for example, the light reception result of the light receiving element 18 from the measuring apparatus 10. Then, the attached-matter determination unit 510 determines whether or not the attached matter is moisture based on the saturation time information indicating the length of time related to saturation of the light receiving element 18.

Fig. 14 is a diagram illustrating a hardware configuration of the determining apparatus 50 according to the present embodiment. The determining apparatus 50 is implemented using an integrated circuit 90. The integrated circuit 90 is, for example, a system-on-chip (SoC).

The integrated circuit 90 includes a bus 902, a processor 904, a memory 906, a storage device 908, an input and output interface 910, and a network interface 912. The bus 902 is a data transmission path for the processor 904, the memory 906, the storage device 908, the input and output interface 910, and the network interface 912 to transmit and receive data to and from each other. However, a method of mutually connecting the processor 904 and the like is not limited to bus connection. The processor 904 is an arithmetic processing device implemented using a microprocessor or the like. The memory 906 is a memory implemented using a random access memory (RAM) or the like. The storage device 908 is a storage device implemented using a read only memory (ROM), a flash memory, or the like.

The input and output interface 910 is an interface for connecting the integrated circuit 90 to peripheral devices. The input and output interface 910 is connected to the measuring apparatus 10.

The network interface 912 is an interface for connecting the integrated circuit 90 to a communication network. This communication network is, for example, a controller area network (CAN) communication network. A method of connecting the network interface 912 to the communication network may be a wireless connection or a wired connection.

The storage device 908 stores a program module for implementing the function of the attached-matter determination unit 510. The processor 904 reads out and executes the program module on the memory 906, thereby implementing the function of the attached-matter determination unit 510.

The hardware configuration of the integrated circuit 90 is not limited to the configuration shown in this diagram. For example, the program module may be stored in the memory 906. In this case, the integrated circuit 90 may not include the storage device 908.

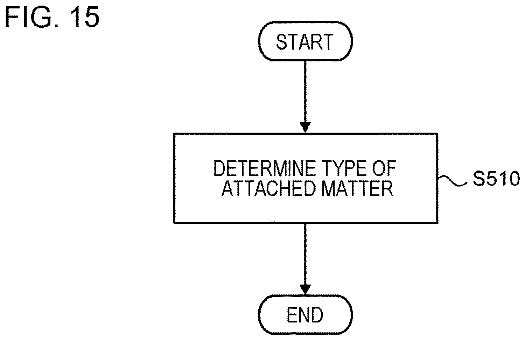

Fig. 15 is a flowchart illustrating a flow of a determining method according to the present embodiment. The determining method according to the present embodiment is a method executed by a computer. The determining method according to the present embodiment is a method of determining the type of attached matter adhering to the transmissive member 20 for the measuring apparatus 10 which emits light through the transmissive member 20 and which detects the reflected light from the target 30. The measuring apparatus 10 includes the light receiving element 18 that receives the reflected light reflected by at least the transmissive member 20.

In the determining method according to the present embodiment, it is determined whether or not the attached matter is moisture based on, for example, the saturation time information indicating the length of time related to saturation of the light receiving element 18 (S510).

According to the present embodiment, the same operations and effects as in the first embodiment can be obtained.

### (Sixth Embodiment)

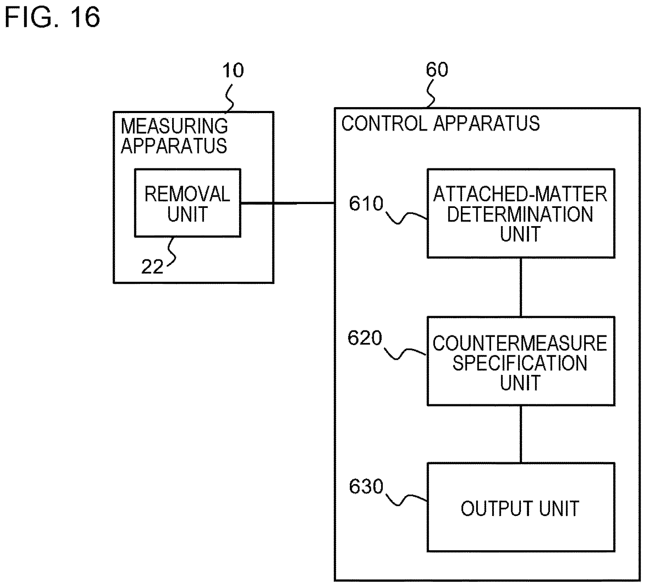

Fig. 16 is a block diagram illustrating a configuration of a control apparatus 60 according to a sixth embodiment. The control apparatus 60 according to the present embodiment is an apparatus that controls one or more removal units 22. The removal unit 22 is provided to remove attached matter on the transmissive member 20 for the measuring apparatus 10 that emits light through the transmissive member 20 and that detects reflected light from the target 30. The control apparatus 60 includes an attached-matter determination unit 610, a countermeasure specification unit 620, and an output unit 630. The attached-matter determination unit 610 determines the type of attached matter on the transmissive member 20. The countermeasure specification unit 620 specifies one or more countermeasures based on the type of attached matter. The output unit 630 outputs a control signal for controlling the one or more removal units 22 based on the specified countermeasure. The details will be described below.

The measuring apparatus 10 according to the present embodiment is the same as the measuring apparatus 10 according to the fourth embodiment except that the attached-matter determination unit 121, the countermeasure specification unit 122, and the output unit 123 are not provided. In addition, the removal unit 22 is the same as the removal unit 22 described in the fourth embodiment. However, the removal unit 22 may be provided in the measuring apparatus 10 or may be a device provided separately from the measuring apparatus 10. The attached-matter determination unit 610, the countermeasure specification unit 620, and the output unit 630 perform the same processing as the attached-matter determination unit 121, the countermeasure specification unit 122, and the output unit 123 according to the fourth embodiment, respectively.

The control apparatus 60 is implemented using the same integrated circuit 90 as that shown in Fig. 14. The input and output interface 910 is connected to the measuring apparatus 10 or the removal unit 22. The storage device 908 stores program modules for implementing the functions of the attached-matter determination unit 610, the countermeasure specification unit 620, and the output unit 630. The processor 904 reads out and executes the program modules on the memory 906, thereby implementing the functions of the attached-matter determination unit 610, the countermeasure specification unit 620, and the output unit 630.

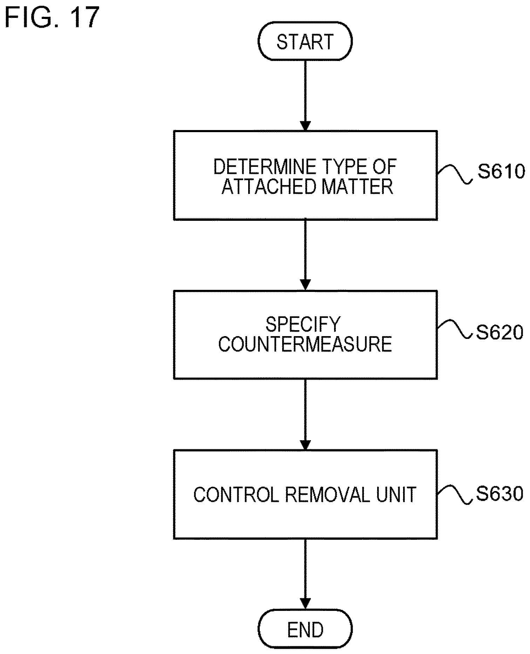

Fig. 17 is a flowchart illustrating a flow of a control method according to the present embodiment. The control method according to the present embodiment is a method executed by a computer. The control method according to the present embodiment is a method of controlling the one or more removal units 22. The removal unit 22 is provided to remove attached matter on the transmissive member 20 for the measuring apparatus 10 that emits light through the transmissive member 20 and that detects reflected light from the target 30. In the control method according to the present embodiment, first, the type of attached matter adhering to the transmissive member 20 is determined (S610). Next, one or more countermeasures are specified based on the determined type of attached matter (S620). Then, the one or more removal units 22 are controlled based on the specified countermeasure (S630).

According to the present embodiment, the same operations and effects as in the fourth embodiment can be obtained.

Although the embodiments and the examples have been described above with reference to the drawings, these are examples of the present invention, and various configurations other than the above can also be employed.

### REFERENCE SIGNS LIST

- 10: measuring apparatus
- 14: light emitting element
- 18: light receiving element
- 20: transmissive member
- 22: removal unit
- 30: target
- 40: model
- 50: determining apparatus
- 60: control apparatus
- 80: integrated circuit
- 90: integrated circuit
- 120: control unit
- 121: attached-matter determination unit
- 122: countermeasure specification unit
- 123: output unit
- 210: temperature sensor
- 410: neural network
- 510: attached-matter determination unit
- 610: attached-matter determination unit
- 620: countermeasure specification unit
- 630: output unit

## Claims

1. A measuring apparatus that emits light through a transmissive member and detects reflected light from a target, the measuring apparatus comprising:
a light receiving element configured to receive reflected light reflected by at least the transmissive member; and
an attached-matter determination unit configured to determine a type of attached matter adhering to the transmissive member,
wherein the attached-matter determination unit is configured to determine whether or not the attached matter is moisture based on saturation time information indicating a length of time related to saturation of the light receiving element.

2. The measuring apparatus according to claim 1,
wherein the saturation time information indicates a length of time during which the light receiving element is saturated.

3. The measuring apparatus according to claim 1 or 2,
wherein the saturation time information indicates a length of time in an output waveform of the light receiving element, with a point in time when saturation is started as a starting point and a point in time when a slope initially becomes zero after the saturation as an ending point.

4. The measuring apparatus according to any one of claims 1 to 3,
wherein the saturation time information indicates a length of time in an output waveform of the light receiving element, with a point in time when saturation is started as a starting point, and an earlier point in time of a point in time of a second zero-crossing after the saturation and a point in time of a first convergence after the saturation as an ending point.

5. The measuring apparatus according to any one of claims 1 to 4,
wherein the light receiving element is an avalanche photodiode.

6. The measuring apparatus according to any one of claims 1 to 5,
wherein the attached-matter determination unit is configured to determine the type of attached matter based on the saturation time information for each of a plurality of emission directions.

7. The measuring apparatus according to claim 6,
wherein the attached-matter determination unit is configured to:
determine whether or not time indicated by the saturation time information for each of the plurality of emission directions exceeds a predetermined first reference value; and
determine that moisture is present as the attached matter, in a case where a proportion of an emission direction for which the time indicated by the saturation time information exceeds the first reference value in the plurality of emission directions exceeds a predetermined proportion.

8. The measuring apparatus according to claim 6 or 7,
wherein the attached-matter determination unit is configured to:
generate a map showing a distribution of time indicated by the saturation time information for the plurality of emission directions;
extract a region where the time indicated by the saturation time information exceeds a predetermined second reference value in the map; and
determine whether or not the attached matter is a water droplet based on a shape of the extracted region.

9. The measuring apparatus according to any one of claims 1 to 8,
wherein the attached-matter determination unit is configured to determine whether or not the attached matter is a water droplet based on at least one of a temperature of the transmissive member and an outside air temperature.

10. The measuring apparatus according to any one of claims 1 to 9,
wherein the attached-matter determination unit is configured to determine whether or not the attached matter is a water droplet further based on a received light intensity of the reflected light from the target.

11. The measuring apparatus according to any one of claims 1 to 10,
wherein the attached-matter determination unit is configured to perform the determination using a trained model trained through machine learning.

12. The measuring apparatus according to any one of claims 1 to 10,
wherein the attached-matter determination unit is configured to determine the type of attached matter on a rule basis using at least the saturation time information.

13. A determining apparatus that determines a type of attached matter adhering to a transmissive member for a measuring apparatus which emits light through the transmissive member and which detects reflected light from a target, the measuring apparatus including a light receiving element that receives reflected light reflected by at least the transmissive member, the determining apparatus configured to:
determine whether or not the attached matter is moisture based on saturation time information indicating a length of time related to saturation of the light receiving element.

14. A determining method of determining a type of attached matter adhering to a transmissive member for a measuring apparatus which emits light through the transmissive member and which detects reflected light from a target, the measuring apparatus including a light receiving element that receives reflected light reflected by at least the transmissive member, the determining method comprising:
determining whether or not the attached matter is moisture based on saturation time information indicating a length of time related to saturation of the light receiving element.

15. A program for causing a computer to function as the determining apparatus according to claim 13.
